# EUROPEAN PATENT APPLICATION

(11) **EP 4 242 018 A1**
(43) Date of publication of application: **13.09.2023**
(21) Application number: 22161261.7
(22) Date of filing: 10.03.2022
(51) Int. Cl.: B60D 1/54, B60D 1/24

(54) **CLUTCH ASSEMBLY FOR A RETRACTABLE TOWING HITCH ASSEMBLY**

(71) Applicant: Brink Towing Systems B.V., 7951 CX Staphorst (NL)
(72) Inventor: EISING, Frederik Jacob, 9415 Hijken (NL)
(74) Representative: Valea AB

(57) **Abstract**

A clutch assembly (10) suitable for use in a towing hitch assembly. The clutch assembly (10) comprises a first member (1) and a second member (2), both rotatably supported for rotation about a first rotational axis (3). The first member (1) engages the second member (2) such that the first member (1) is able to drive rotational movement of the second member (2) in a first rotational direction (D1) about the first rotational axis (3) and such that the first member (1) is also able to drive rotational movement of the second member (2) in a second rotational direction (D2) opposite the first rotational direction (D1). The engagement is configured with a rotational play between respective driving positions and the play is used such that such relative rotational movement between the first member (1) and the second member (2) controls movement of a locking mechanism (4) for locking the second member (2) when it is not driven by the first member (1).

## Description

### Technical field

The present disclosure relates to electrically operated retractable towing hitch assemblies for motor vehicles. Specifically, the present disclosure relates to a mechanism for securing a towing hitch assembly in its stowed and/or deployed position.

### Background

Towing hitch assemblies are commonly used on motor vehicles to allow the vehicle to pull a load after the vehicle or carry a load on a hitch arm of the towing hitch assembly. Some towing hitch assemblies are electrically controlled such that the hitch arm is movable between a stowed position and a deployed position by an actuator of the towing hitch assembly. A rotational movement of an electric actuator of the towing hitch assembly drives a rotatable member of a movement mechanism of the towing hitch assembly controlling movement of the hitch arm. When the actuator is operating it provides a high torque to control rotation of the rotatable member, but when the actuator is not operative, the torque of the actuator is much lower and vibrations may induce movements of various parts of the movement mechanism, which in turn risks displacing the hitch arm away from its stowed and/or deployed position. Inadvertent movement away from the stowed position would introduce a risk of the hitch arm hitting foreign objects when the vehicle is in motion. Likewise, inadvertent movement away from the deployed position would introduce a risk of losing a trailer and/or damaging the vehicle or an object attached to the towing hitch, such as a bicycle carrier.

A problem with some prior art towing hitch assemblies is thus inadvertent movement of the hitch arm away from its stowed and/or deployed position.

### Summary

Accordingly, an object of the present disclosure is to mitigate inadvertent movement of a hitch arm of a towing hitch assembly away from a stowed and/or a deployed position of the hitch arm.

According to a first aspect of the present disclosure, this and other objects are achieved by a clutch assembly as defined in independent claim 1, with various embodiments defined in the dependent claims. The clutch assembly comprises a first member and a second member. The first member is rotatably supported for rotation about a first rotational axis and the second member is rotatably supported for rotation about the first rotational axis. The first member engages the second member such that the first member is able to drive rotational movement of the second member in a first rotational direction about the first rotational axis and such that the first member is also able to drive rotational movement of the second member in a second rotational direction opposite the first rotational direction. The engagement between the first member and the second member is configured with a rotational play such that the first member is movable to a first relative rotational position with respect to the second member, in which first relative rotational position the first member is able to drive the second member in the first rotational direction, and such that the first member is movable to a second relative rotational position, with respect to the second member, in which second relative rotational position the first member is able to drive the second member in the second rotational direction, and such that the first member is movable through a first range of relative rotational positions between the first relative rotational position and the second relative rotational position, in which first range of relative rotational positions the first member is not able to drive the second member. The clutch assembly further comprises a locking mechanism movable between a locking position, in which the locking mechanism prevents rotation of the second member, and an unlocking position, in which the locking mechanism is disengaged from the second member such that the second member is able to rotate about the first rotational axis. The locking mechanism is operatively connected to the first member and to the second member such that the relative rotational position of the first member with respect to the second member controls movement of the locking mechanism between its locking position and its unlocking position.

Such a clutch assembly enables the first member to optionally drive the second member in the first rotational direction and the second rotational direction respectively, and prevents the second member from driving the first member.

Starting from a state in which the locking mechanism is in its locking position preventing movement of the second member, a torque about the first rotational axis is applied to the first member in either the first rotational direction or the second rotational direction. The torque moves the first member towards the respective first or second relative rotational position and the relative movement between the first member and the second member is used to move the locking mechanism from its locking position to its unlocking position. Hence, once the first member reaches its first or second relative rotational position, the second member is no longer locked by the locking mechanism, wherein the continued torque applied to the first member is used to drive rotation of the second member about the first rotational axis. Once a desired rotation of the second member has been achieved, the first member is rotated in the reverse/opposite rotational direction away from its first or second rotational position until the locking mechanism again reaches its locking position, such that the locking mechanism again prevents rotation of the second member. The reverse rotation is a relative rotation, meaning that the first member could be static and the second member instead be moved, for example due to vibrations making the second member rotate until the first member is within the range of play relatively the second member, such that the locking mechanism moves to its locking position.

The locking mechanism may be configured such that the locking mechanism is moved to its unlocking position in response to the first member approaching the first relative rotational position, wherein the locking mechanism is configured such that the locking mechanism is moved to its unlocking position in response to the first member approaching the second relative rotational position, and wherein the locking mechanism is configured such that the locking mechanism is moved to its locking position in response to the first member approaching the first range of relative rotational positions.

The locking mechanism may comprise a first interlocking means and a second interlocking means. The first interlocking means is fixed, and the second interlocking means is movable between a first position, in which the first interlocking means interlocks with the second interlocking means, and a second position in which the first interlocking means is free from the second interlocking means. The second interlocking means is operatively connected to, or integrated with, the second member such that rotation of the second member is linked to rotation of the second interlocking means, and vice versa.

By integrating the second interlocking means with the second member, they jointly rotate. Alternatively, the second interlocking means could be a separate member which is operatively connected to the second member for joint rotation, for example by provision of gears on the second member meshing into corresponding gears on the first member, or by providing the second member and the second interlocking means on a shaft on which both members are fitted such that they jointly rotate, for example by provision of splines on the shaft and corresponding splines on the second member and on the second interlocking means. Interlocking action between the first interlocking means and the second interlocking means may be provided by making one of them movable of by making both of them movable, for example by making the second interlocking means axially movable with respect to an axis of rotation about which the second interlocking means is rotatable.

The second member may be movable along the first rotational axis. Also, the locking mechanism may comprise a first cam means and a second cam means. The first cam means is provided on one of the first member and the second member and the second cam means is provided on the other one of the first member and the second member. Also, the first cam means and the second cam means are shaped such that they work together to jointly control an axial distance between the first member and the second member along the first rotational axis based on the relative rotational position of the first member with respect to the second member. This distance controlled may be a minimum distance, a maximum distance, or both, depending on the design of the first cam means and the second cam means. Movement of the second interlocking means between its first position and its second position and vice versa is in this embodiment controlled by the axial movement of the second member.

When axial distance controlled by the first cam means and the second cam means is a minimum distance, the second member may be biased towards the first member by a first biasing means.

When the axial distance controlled by the first cam means and the second cam means is a maximum distance, the second member may be biased away from the first member by a first biasing means.

The second interlocking means may be attached to, or integrated with, the second member such that the second member and the second interlocking means move together.

The first interlocking means and the second interlocking means may be shaped such that they are able to interlock in a plurality of relative rotational positions with respect to the first rotational axis.

When rotational movement of the second member induced by the first member stops, the alignment between the first and second interlocking means may not be exactly such that the first interlocking means can interlock with the second interlocking means, for example due to recesses and protrusions of the interlocking means not aligning such that they can be moved into engagement. By enabling interlocking in a plurality of positions, for example by provision of a larger number of matching pairs of protrusions and recesses on the first and the second interlocking means respectively, the second member need to rotate less before correct alignment is achieved for interlocking. Such additional movement may be induced by vibrations in the system wherein the interlocking means will engage after enough rotational movement of the second interlocking means has occurred, or the movement may be induced by an attempt by external forces to rotate the second member which thus quickly stops as soon as the first and second interlock means engage.

An angular separation between the plurality of relative rotational position in which the first interlocking means and the second interlocking means are able to interlock may be less than 20 degrees, for example less than 8 degrees or less than 6 degrees.

One of the first cam means and the second cam means may comprise a cam, wherein the other one of the first cam means and the second cam means comprises a cam follower configured to move along the cam upon relative rotation between the first cam means and the second cam means to convert the relative rotational motion between the cam and the cam follower to a relative axial displacement of the second member and/or of the second interlocking means, along the first rotational axis.

The first cam means and the second cam means may both comprise a respective cam, wherein the cams are configured to slide against each other upon relative rotation between the first cam means and the second cam means to convert the relative rotational motion between the cams to a relative axial displacement of the second member along the first rotational axis. By configuring both the first cam means and the second cam means with a respective cam, a larger axial displacement is enabled for a given amount of relative rotational movement, thus enabling a more compact design of the clutch assembly.

The clutch assembly may further comprise a second biasing means configured to act between the first member and the second member to apply a momentum between them about the first rotational axis to bring them to a relative rotational position within the first range of relative rotational positions.

The rotational play may be at least 15 degrees, preferably at least 90 degrees, or even more preferably at least 150 degrees. The rotational play may in some embodiments be even larger, such as 330-355 degrees.

The engagement between the first member and the second member for driving of the second member by the first member may be such that the first member symmetrically engages the second member, with respect to the first rotational axis, in the first relative rotational position and in the second relative rotational position respectively.

According to a second aspect of the present disclosure, this and other objects are also achieved by a towing hitch assembly for attachment to a vehicle. The towing hitch assembly comprises a hitch arm comprising a tow ball onto which objects to be carried or towed are attachable, and a main assembly attachable to the vehicle. The main assembly comprises a housing and a third member. The third member is rotatably mounted in the housing, and is operatively coupled to the hitch arm such that movement of the hitch arm between a stowed position and a deployed position is controlled by rotation of the third member. The towing hitch assembly further comprises an actuator assembly attachable to, or integrated with, the main assembly. The actuator assembly comprises an actuator and an output shaft rotatable by the actuator. The output shaft is operatively connected to the third member via the clutch assembly according to any one of claims 1-13, said clutch assembly also being described above. The output shaft is operatively connected to the first member of the clutch assembly. The second member of the clutch assembly is operatively connected to the third member.

The third member may be directly connected to the second member for joint rotation about the first rotational axis, or the third member may be connected to the second member via one or more gears or a via rotatable joint.

The third member may be a stiff shaft or a flexible shaft.

The third member may be rotatable about the first rotational axis, or about a rotational axis offset from, and/or angled with respect to the first rotational axis.

The actuator may be a rotary actuator, such as a stepper motor or a motor with a rotation sensor such as a hall effect sensor.

The clutch assembly enables the first member to optionally drive the second member in the first rotational direction and the second rotational direction respectively, and prevents the second member from driving the first member once the first member has been moved to its first range of relative rotational positions.

Starting from a state in which the locking mechanism is in its locking position preventing movement of the second member, a torque about the first rotational axis is applied to the first member in either the first rotational direction or the second rotational direction by the output shaft of the actuator. The torque moves the first member towards the respective first or second relative rotational position and the relative movement between the first member and the second member is used to move the locking mechanism from its locking position to its unlocking position. Hence, once in its unlocking position, the continued torque applied to the first member is used to drive rotation of the second member about the first rotational axis. Once a desired rotation of the second member has been achieved, the first member is rotated in the opposite rotational direction away from its first or second rotational position until the locking mechanism again reaches its locking position, such that the locking mechanism again prevents rotation of the second member.

The use of a stepper motor or a motor with rotation sensor, such as a hall effect sensor, is advantageous since it allows precise control of the rotational position of the first member of the clutch assembly. If a stepper motor is not use, other control methods may be used, such as control based on time and/or based on measurement of driving current to the actuator, wherein a spike in driving current indicate for example that the first member begins to drivingly engage the second member and an even higher current spike that the stowed of deployed position of the hitch arm has been reached.

According to an aspect, a vehicle is provided, said vehicle comprising a towing hitch assembly as described above.

### Brief description of drawings

Fig. 1 is a perspective view of an embodiment of a towing hitch assembly comprising a clutch assembly according to the present disclosure.
Fig. 2 is a cross-sectional view of the towing hitch assembly also shown in fig. 1.
Fig. 3 is an enlarged view of portion A of the view in fig. 2 showing details of the clutch assembly with the locking mechanism in its unlocking position.
Fig. 4 is a perspective view of the first member of the clutch assembly.
Fig. 5 is a perspective view of the second member of the clutch assembly, wherein the second interlocking means is integrated with the second member.
Figs. 6a, 7a and 8a show the clutch assembly in various relative rotational positions but the first interlocking means of the locking mechanism is hidden for illustrative purposes.
Figs. 6b, 7b, and 8b show the clutch assembly also shown in figs. 6a, 7a, and 8a in the corresponding relative rotational positions, however with the first interlocking means shown.

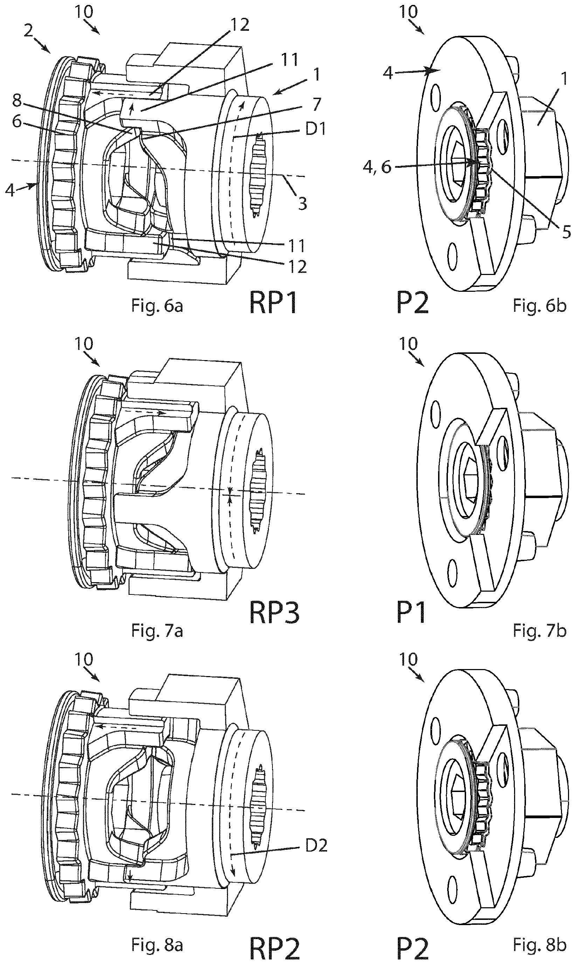

Figs. 6a and 6b show the clutch assembly in the first relative rotational position corresponding to an unlocking position of the locking mechanism
Figs. 7a, and 7b show the clutch assembly in a relative rotational position within the first range of relative rotational positions between the first relative rotational position and the second relative rotational position, said range corresponding to a locking position of the locking mechanism.
Figs. 8a and 8b show the clutch assembly in the second relative rotational position corresponding to an unlocking position of the locking mechanism.

### Detailed description

A first embodiment of a clutch assembly 10 according to the invention will hereinafter be described with reference to the appended drawings. Also described is a towing hitch assembly 13 comprising such a clutch assembly 10.

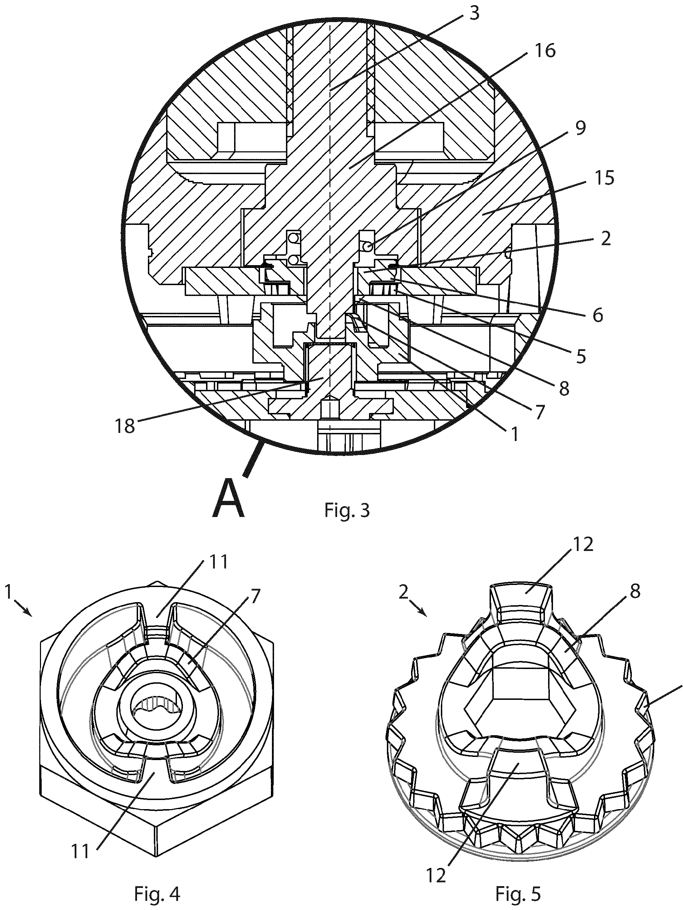

As shown figs. 3-8, the clutch assembly 10 comprises a first member 1 and a second member 2. The first member 1 is rotatably supported for rotation about a first rotational axis 3 and the second member 2 is also rotatably supported for rotation about the first rotational axis 3. As shown in figs. 6a-b and 8a-b, the first member 1 engages the second member 2 such that the first member 1 is able to drive rotational movement of the second member 2 in a first rotational direction D1 about the first rotational axis 3 and such that the first member 1 is also able to drive rotational movement of the second member 2 in a second rotational direction D2 opposite the first rotational direction D1.

The engagement between the first member 1 and the second member 2 is configured with a rotational play such that the first member 1 is movable to a first relative rotational position RP1 with respect to the second member 2, in which first relative rotational position RP1 the first member 1 is able to drive the second member 2 in the first rotational direction D1, and such that the first member 1 is movable to a second relative rotational position RP2, with respect to the second member 2, in which second relative rotational position RP2 the first member 1 is able to drive the second member 2 in the second rotational direction D2, and such that the first member 1 is movable through a first range RP3 of relative rotational positions between the first relative rotational position RP1 and the second relative rotational position RP2, in which first range of relative rotational positions RP3 the first member 1 is not able to drive the second member 2.

In this embodiment, the engagement is provided by a first pair of opposite protrusions 11 of the first member 1 (opposite with respect to the first rotational axis 3), which overlap in the axial direction of the first rotational axis 3 with a corresponding second pair of opposite protrusions 12 of the second member 2 (opposite with respect to the first rotational axis 3). The pairs of protrusions 11, 12 are configured such that the first member 1 symmetrically engages the second member 2, with respect to the first rotational axis 3, in the first relative rotational position RP1 and in the second relative rotational position RP2 respectively. The symmetrical engagement keeps momentum between the first member 1 and the second member 2 aligned with the first rotational axis 3, thereby reducing stress on the first member 1 and on the second member 2 whilst also mitigating jamming of the second member 2 at axial displacement along the first rotational axis 3.

In other embodiments, any other suitable configuration of the engagement may be provided instead.

The clutch assembly 10 further comprises a locking mechanism 4 movable between a locking position P1, in which the locking mechanism 4 prevents rotation of the second member 2, and an unlocking position P2, in which the locking mechanism 4 is disengaged from the second member 2 such that the second member 2 is able to rotate about the first rotational axis 3. The locking mechanism 4 is operatively connected to the first member 1 and to the second member 2 such that the relative rotational position of the first member 1 with respect to the second member 2 controls movement of the locking mechanism 4 between its locking position P1 and its unlocking position P2.

The locking mechanism 4 is configured such that the locking mechanism 4 is moved to its unlocking position P2 in response to the first member 1 approaching the first relative rotational position RP1. The locking mechanism 4 is further configured such that the locking mechanism 4 is moved to its unlocking position P2 in response to the first member 1 approaching the second relative rotational position RP2. Further, the locking mechanism 4 is configured such that the locking mechanism 4 is moved to its locking position P1 in response to the first member 1 approaching the first range RP3 of relative rotational positions.

The locking mechanism 4 comprises a first interlocking means 5 and a second interlocking means 6, wherein the first interlocking means 5 is fixed, for example to the housing of a device in which the clutch assembly is mounted, such as to a housing or other fixed part of a towing hitch assembly 13. The second interlocking means 6 is movable between a first position, in which the first interlocking means 5 interlocks with the second interlocking means 6, and a second position in which the first interlocking means 5 is free from the second interlocking means 6. The second interlocking means 6 is operatively connected to, or integrated with, the second member 2 such that rotation of the second member 2 is linked to rotation of the second interlocking means 6, and vice versa.

In other embodiments, the locking mechanism 4 may comprise some other suitable means for optionally preventing rotation of the second member 2, such as a friction brake movable between a locking position in which it presses on a surface of the second member 2, or on the surface of an additional rotatable member operatively connected to the second member 2 for joint rotation with the second member 2. The additional rotatable member may be attached to a shaft to which the second member 2 is attached, or the additional rotatable member may be supported on a separate shaft and gear into corresponding gears on the second member 2. However, the proposed design of the locking mechanism 4 of the first embodiment of the clutch assembly is compact and comprises few parts, thereby making it robust.

As shown in figs. 4-8, the second member 2 is in this embodiment movable along the first rotational axis 3. In alternative embodiments in which the locking mechanism 4 does not comprise any interlocking means provided on the second member 2, the cams may be provided on some other axially movable member controlling operation of the locking mechanism 4 instead of relying on axial movability of the second member 2. However, in the present embodiment, the locking mechanism 4 comprises a first cam means 7 and a second cam means 8, wherein the first cam means 7 is provided on one of the first member 1 and the second member 2 and the second cam means 8 is provided on the other one of the first member 1 and the second member 2. The first cam means 7 and the second cam means 8 are shaped such that they work together to jointly control an axial distance between the first member 1 and the second member 2 along the first rotational axis 3 based on the relative rotational position of the first member 1 with respect to the second member 2, wherein movement of the second interlocking means 6 between its first position and its second position and vice versa is controlled by the axial movement of the second member 2.

The first and second cam means 7, 8 thus cooperate to vary an axial distance between members, in this embodiment between the first member 1 and the second member 2. In this embodiment, the cam is designed to define a minimum axial distance between the first member 1 and the second member 2, wherein a first biasing means 9 in the form of a spring or other suitable resilient member is fitted in the clutch assembly 10 to bias the first cam means 7 and the second cam means 8 together, i.e. to reduce the axial distance between the first member 1 and the second member 2 to the minimum axial distance controlled by the cams. In other embodiments, a cam follower may be configured to run in a corresponding cam track which enables bi-directional control of the axial distance between the first member 1 and the second member 2, wherein the spring would not be needed since the cam follower is able to push and pull the second member 2 in both directions along the first rotational axis 3. In yet an alternative embodiment, a first biasing means may instead be provided between the first member 1 and the second member 2 such that they are forced apart by the first biasing means, wherein the first and second cam means are instead configured to control a maximum relative axial distance between the first member 1 and the second member 2. The maximum relative position could for example be controlled using a cam track and a corresponding cam follower running in the cam track. Alternatively, the first member 1 may be axially movable instead of the second member 2 being axially movable, wherein the axial position of the first member 1 is controlled by a suitable arrangement of a first cam means 7 and a second cam means 8, one of said cam means being provided on the first member 1, and the other cam means being provided on the second member 2 or on a fixed member of a device in which the clutch assembly 10 is mounted, such as to a housing or other fixed part of a towing hitch assembly 13.

In the first embodiment illustrated in figs. 6-8, the second interlocking means 6 integrated with the second member 2 such that the second member 2 and the second interlocking means 6 move together.

The first interlocking means 5 and the second interlocking means 6 are shaped such that they are able to interlock in a plurality of relative rotational positions with respect to the first rotational axis 3. This can be achieved in any suitable way, but here the second interlocking means 6 is shaped as a male gear with gear teeth evenly distributed about the rotational axis of the second interlocking means 6, wherein the first interlocking means 5 is provided with a corresponding female recess. However, any other suitable shape of the first 5 and second 6 interlocking means may be used instead.

Here, an angular separation between the plurality of relative rotational positions in which the first interlocking means 5 and the second interlocking means 6 are able to interlock is defined by the angular separation of the gear teeth. The angular separation between the positions may be less than 20 degrees, for example less than 8 degrees or less than 6 degrees. As shown in fig. 5, the gear teeth are somewhat rounded to promote easier mating with the female recess, which is also provided with rounded or chamfered lead-in portions for guiding the second interlocking means 6 into engagement with the first interlocking means 5.

The present embodiment of the clutch assembly 10 requires a change of relative rotational position between the first member 1 and the second member 2 after a driving action of the first member 1 on the second member 2 has been completed, to enable the locking mechanism 4 to move back to its locking position. This relative movement may be controlled by an actuator drivingly attached to the first member 1, or one may simply rely on any such relative movement induced by vibration of the clutch assembly 10 in use. If no such relative movement would be induced in use, there is no need of the locking action which the locking mechanism 4 is able to provide, and if the relative movement would be induced, for example by rotation of the second member 2 due to said vibrations or external forces applied to a shaft of which the second member 2 is mounted, the locking mechanism 4 will move to its locking positions after a certain amount of relative rotational movement has occurred.

In an alternative embodiment (not illustrated), a second biasing means may be provided to act between the first member 1 and the second member 2 to apply a momentum between them about the first rotational axis 3 to bring them to a relative rotational position within the first range RP3 of relative rotational positions. Such a second biasing means would thus promote movement of the locking mechanism 4 to its locking position.

In order for the relative rotational position to be used for control of the movement of the locking mechanism 4, a certain amount of said play is needed. A larger amount of play enables greater relative movements and thus greater relative movements of other movable parts, such as parts of the locking mechanism 4. A greater play is also suitable when using cams to convert a change in relative rotational position to an axial movement of another part. The rotational play may for example be at least 15 degrees, preferably at least 90 degrees, or even more preferably at least 150 degrees. The rotational play may in some embodiments be even larger, such as 330-355 degrees. In the embodiment shown in the enclosed drawings, the first member and the second member are designed to symmetrically engage each other at two opposing regions of contact, wherein the play is limited to about 165 degrees, i.e. 360 degrees divided in two, minus rotational range consumed by goods thickness. If only one region of contact would be provided, a larger rotational play would be possible, i.e. 360 degrees minus goods thickness of contacting protrusions of the first and second members.

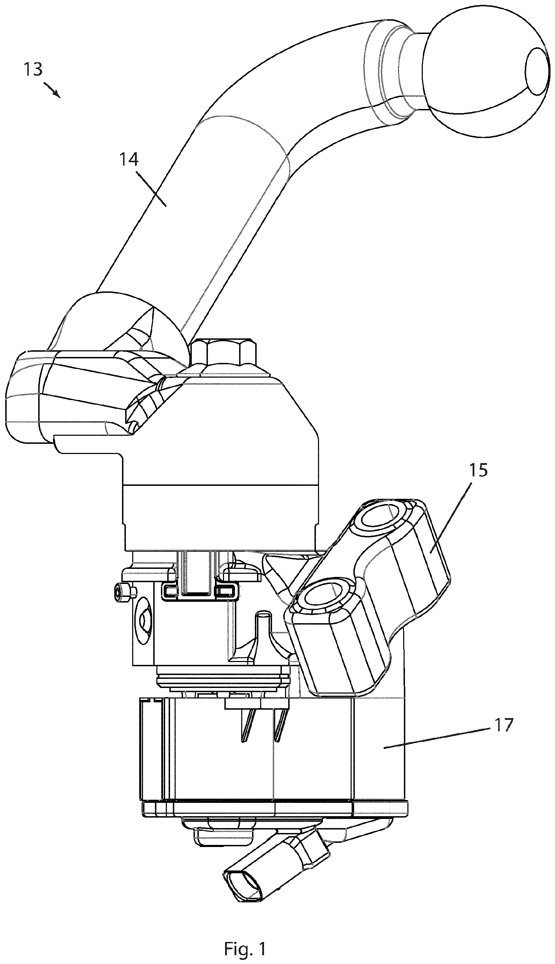

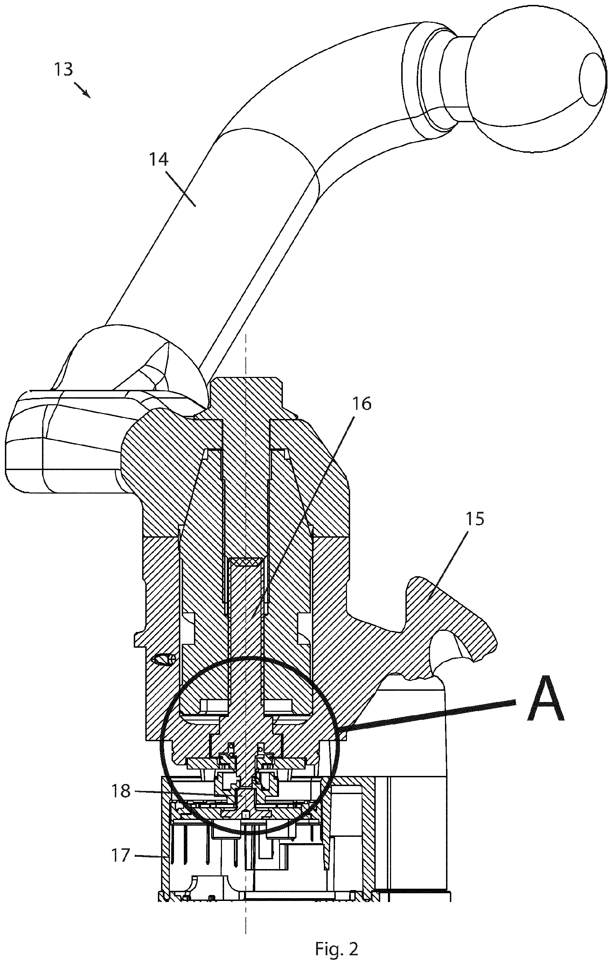

As shown in figs. 1-3, the clutch assembly 10 is suitable for use in a towing hitch assembly 13.

The towing hitch assembly 13 comprises a hitch arm 14 comprising a tow ball onto which objects to be carried or towed are attachable, and a main assembly attachable to the vehicle. The vehicle may be a car or a truck. The main assembly comprises a housing 15 and a third member 16, said third member 16 being rotatably mounted in the housing 15. The third member 16 is operatively coupled to the hitch arm 14 such that movement of the hitch arm 14 between a stowed position and a deployed position is controlled by rotation of the third member 16. The towing hitch assembly 13 further comprises an actuator assembly 17 attachable to, or integrated with, the main assembly.

The actuator assembly 17 comprises an actuator and an output shaft 18 rotatable by the actuator. The output shaft 18 is operatively connected to the third member 16 via the above-described clutch assembly 10. The output shaft 18 is operatively connected to the first member 1 of the clutch assembly 10, and the second member 2 of the clutch assembly 10 is operatively connected to the third member 16. The actuator is a stepper motor although any other actuator may alternatively be used instead, depending on the configuration of the actuator assembly 17 and depending of the design of a transmission between the actuator and the output shaft 18.

**Table of reference numerals**

| | | | |
|---|---|---|---|
| 1 | first member | 14 | hitch arm |
| 2 | second member | 15 | housing of towing hitch assembly |
| 3 | first rotational axis | 16 | third member |
| 4 | locking mechanism | 17 | actuator assembly |
| 5 | first interlocking means | 18 | output shaft of actuator assembly |
| 6 | second interlocking means | D1 | first rotational direction |
| 7 | first cam means | D2 | second rotational direction |
| 8 | second cam means | RP1 | first relative rotational position |
| 9 | first biasing means | RP2 | second relative rotational position |
| 10 | clutch assembly | RP3 | first range of relative rotational positions |
| 11 | first pair of opposite protrusions | P1 | locking position |
| 12 | second pair of opposite protrusions | P2 | unlocking position |
| 13 | towing hitch assembly | | |

## Claims

1. Clutch assembly (10) comprising a first member (1) and a second member (2),
wherein the first member (1) is rotatably supported for rotation about a first rotational axis (3),
wherein the second member (2) is rotatably supported for rotation about the first rotational axis (3),
wherein the first member (1) engages the second member (2) such that the first member (1) is able to drive rotational movement of the second member (2) in a first rotational direction (D1) about the first rotational axis (3) and such that the first member (1) is also able to drive rotational movement of the second member (2) in a second rotational direction (D2) opposite the first rotational direction (D1),
wherein said engagement between the first member (1) and the second member (2) is configured with a rotational play such that the first member (1) is movable to a first relative rotational position (RP1) with respect to the second member (2), in which first relative rotational position (RP1) the first member (1) is able to drive the second member (2) in the first rotational direction (D1), and such that the first member (1) is movable to a second relative rotational position (RP2), with respect to the second member (2), in which second relative rotational position (RP2) the first member (1) is able to drive the second member (2) in the second rotational direction (D2), and such that the first member (1) is movable through a first range (RP3) of relative rotational positions between the first relative rotational position (RP1) and the second relative rotational position (RP2), in which first range (RP3) of relative rotational positions the first member (1) is not able to drive the second member (2),
wherein the clutch assembly (10) comprises a locking mechanism (4) movable between a locking position (P1), in which the locking mechanism (4) prevents rotation of the second member (2), and an unlocking position (P2), in which the locking mechanism (4) is disengaged from the second member (2) such that the second member (2) is able to rotate about the first rotational axis (3), and
wherein the locking mechanism (4) is operatively connected to the first member (1) and to the second member (2) such that the relative rotational position of the first member (1) with respect to the second member (2) controls movement of the locking mechanism (4) between its locking position (P1) and its unlocking position (P2).

2. The clutch assembly (10) according to claim 1, wherein the locking mechanism (4) is configured such that the locking mechanism (4) is moved to its unlocking position (P2) in response to the first member (1) approaching the first relative rotational position (RP1),
wherein the locking mechanism (4) is further configured such that the locking mechanism (4) is moved to its unlocking position (P2) in response to the first member (1) approaching the second relative rotational position (RP2), and
wherein the locking mechanism (4) is further configured such that the locking mechanism (4) is moved to its locking position (P1) in response to the first member (1) approaching the first range (RP3) of relative rotational positions.

3. The clutch assembly (10) according to any one of claims 1-2, wherein the locking mechanism (4) comprises a first interlocking means (5) and a second interlocking means (6), wherein the first interlocking means (5) is fixed, and wherein the second interlocking means (6) is movable between a first position, in which the first interlocking means (5) interlocks with the second interlocking means (6), and a second position in which the first interlocking means (5) is free from the second interlocking means (6),
wherein the second interlocking means (6) is operatively connected to, or integrated with, the second member (2) such that rotation of the second member (2) is linked to rotation of the second interlocking means (6), and vice versa.

4. The clutch assembly (10) according to claim 3,
wherein the second member (2) is movable along the first rotational axis (3),
wherein the locking mechanism (4) comprises a first cam means (7) and a second cam means (8),
wherein the first cam means (7) is provided on one of the first member (1) and the second member (2) and the second cam means (8) is provided on the other one of the first member (1) and the second member (2),
wherein the first cam means (7) and the second cam means (8) are shaped such that they work together to jointly control an axial distance between the first member (1) and the second member (2) along the first rotational axis (3) based on the relative rotational position of the first member (1) with respect to the second member (2),
wherein movement of the second interlocking means (6) between its first position and its second position and vice versa is controlled by the axial movement of the second member (2).

5. The clutch assembly (10) according to claim 4,
wherein the axial distance controlled by the first cam means (7) and the second cam means (8) is a minimum axial distance, and wherein the second member (2) is biased towards the first member (1) by a first biasing means (9), or
wherein the axial distance controlled by the first cam means (7) and the second cam means (8) is a maximum axial distance, and wherein the second member (2) is biased away from the first member (1) by a first biasing means (9).

6. The clutch assembly (10) according to any one of claims 4 or 5, wherein the second interlocking means (6) attached to, or integrated with, the second member (2) such that the second member (2) and the second interlocking means (6) move together.

7. The clutch assembly (10) according to claim 6, wherein the first interlocking means (5) and the second interlocking means (6) are shaped such that they are able to interlock in a plurality of relative rotational positions with respect to the first rotational axis (3).

8. The clutch assembly (10) according to claim 7, wherein an angular separation between the plurality of relative rotational positions in which the first interlocking means (5) and the second interlocking means (6) are able to interlock is less than 20 degrees, for example less than 8 degrees or less than 6 degrees.

9. The clutch assembly (10) according to any one of claims 4-8, wherein one of the first cam means (7) and the second cam means (8) comprises a cam, wherein the other one of the first cam means (7) and the second cam means (8) comprises a cam follower configured to move along the cam upon relative rotation between the first cam means (7) and the second cam means (8) to convert the relative rotational motion between the cam and the cam follower to a relative axial displacement of the second member (2) along the first rotational axis (3).

10. The clutch assembly (10) according to any one of claims 4-8, wherein the first cam means (7) and the second cam means (8) both comprise a respective cam, wherein the cams are configured to slide against each other upon relative rotation between the first cam means (7) and the second cam means (8) to convert the relative rotational motion between the cams to a relative axial displacement of the second member (2) along the first rotational axis (3).

11. The clutch assembly (10) according to any one of the preceding claims, further comprising a second biasing means configured to act between the first member (1) and the second member (2) to apply a momentum between them about the first rotational axis (3) to bring them (1, 2) to a relative rotational position within the first range (RP3) of relative rotational positions.

12. The clutch assembly (10) according to any one of the preceding claims, wherein the rotational play is at least 15 degrees, preferably at least 90 degrees, or even more preferably at least 150 degrees.

13. The clutch assembly (10) according to any one of the preceding claims, wherein the engagement between the first member (1) and the second member (2) for driving of the second member (2) by the first member (1) is such that the first member (1) symmetrically engages the second member (2), with respect to the first rotational axis (3), in the first relative rotational position (RP1) and in the second relative rotational position (RP2) respectively.

14. A towing hitch assembly (13) for attachment to a vehicle, said towing hitch assembly (13) comprising:
a hitch arm (14) comprising a tow ball onto which objects to be carried or towed are attachable, and
a main assembly attachable to the vehicle, said main assembly comprising a housing (15) and a third member (16), said third member (16) being rotatably mounted in the housing (15, wherein the third member (16) is operatively coupled to the hitch arm (14) such that movement of the hitch arm (14) between a stowed position and a deployed position is controlled by rotation of the third member (16),
wherein the towing hitch assembly (13) further comprises an actuator assembly (17) attachable to, or integrated with, the main assembly,
wherein the actuator assembly (17) comprises an actuator and an output shaft (18) rotatable by the actuator, wherein the output shaft (18) is operatively connected to the third member (16) via a clutch assembly (10) according to any one of claims 1-13,
wherein the output shaft (18) is operatively connected to the first member (1) of the clutch assembly (10), and wherein the second member (2) of the clutch assembly (10) is operatively connected to the third member (16).

15. The towing hitch assembly (13) according to claim 14, wherein the third member (16) is directly connected to the second member for joint rotation, or wherein the third member (16) is connected to the second member via one or more gears.

16. The towing hitch assembly (13) according to any one of claims 14-15, wherein the actuator is a rotary actuator, such as a stepper motor or a motor with a rotation sensor such as a hall effect sensor.

17. A vehicle, such as a car, a truck or a bus, said vehicle comprising the towing hitch assembly (13) according to any one of claims 14-16.
